# EUROPÄISCHE PATENTSCHRIFT

(11) **EP 2 679 605 B1**
(45) Veröffentlichungstag und Bekanntmachung des Hinweises auf die Patenterteilung: **14.10.2015**
(21) Anmeldenummer: 12174420.5
(22) Anmeldetag: 29.06.2012
(51) Int. Cl.: C08C 19/06

(54) **POLYBUTADIEN MIT EPOXYGRUPPEN**
POLYBUTADIENE WITH EPOXY GROUPS
POLYBUTADIÈNE AVEC GROUPES ÉPOXY

(43) Veröffentlichungstag der Anmeldung: 01.01.2014
(73) Patentinhaber: Evonik Degussa GmbH, 45128 Essen (DE)
(72) Erfinder: Berlineanu, Andreas, 45772 Marl (DE); Haberkorn, Niko, 45657 Recklinghausen (DE)

(56) Entgegenhaltungen:
- EP-A2- 1 323 739
- C. M. ROLAND ET AL: "Plateau modulus of epoxidized polybutadiene", MACROMOLECULES, Bd. 26, Nr. 24, 1. November 1993 (1993-11-01), Seiten 6474-6476, XP55034889, ISSN: 0024-9297, DOI: 10.1021/ma00076a025

## Beschreibung

Die Erfindung betrifft ein Polybutadien mit Epoxygruppen, wobei das Polybutadien die aus 1,3-Butadien abgeleiteten Monomereinheiten 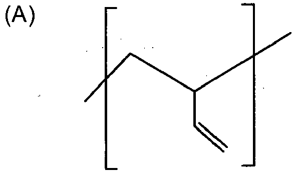 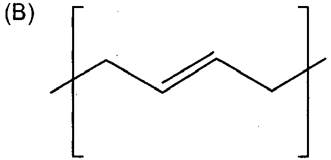 und 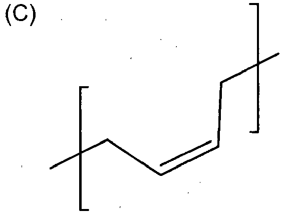 umfasst, wobei der Anteil von A an der Gesamtheit der im Polybutadien enthaltenen aus 1,3-Butadien abgeleiteten Monomereinheiten 10 bis 60 Molprozent beträgt, wobei die Summe der Anteile von B und C an der Gesamtheit der im Polybutadien enthaltenen aus 1,3-Butadien abgeleiteten Monomereinheiten 40 bis 90 Molprozent beträgt, ein Verfahren zur Herstellung des erfindungsgemäßen Polybutadiens sowie eine Zusammensetzung umfassend das Polybutadien mit Epoxygruppen.

Polybutadiene stellen eine Klasse industriell hoch relevanter organischer Verbindungen dar, die durch Polymerisation von aus dem Cracken von Erdöl in großen Mengen erhältlichem 1,3-Butadien hergestellt werden. Sie sind interessante und wichtige Ausgangsstoffe für chemische Synthesen gleichermaßen im Labor- und Großmaßstab.
Die Polymerisation von 1,3-Butadien zu Polybutadien ist über im Stand der Technik beschriebene Verfahren, die eine anionische Polymerisation umfassen, leicht zu bewerkstelligen. Für viele Anwendungen können die entstehenden Polybutadiene jedoch nicht direkt verwendet werden, sondern sie müssen zunächst einer Modifizierung unterzogen werden.

Als eine solche Modifizierung bietet sich insbesondere die Epoxidierung mittels Reagenzien wie Epichlorhydrin an. Epoxidgruppen können für vielfältige weitere Reaktionen, insbesondere mit Anhydriden oder Aminen, genutzt werden. Das entstehende Polybutadien mit Epoxygruppen kann somit mit Reagenzien wie Diaminen unter Bildung eines widerstandsfähigen Kunststoffes umgesetzt werden.

Shell Oil Company, Research Disclosure, Vol. 416, 12, 1998, Seite 1594, beschreibt die Darstellung von Butadien-Polymeren mit Epoxygruppen. Die Polydiendiole wurden über anionische Polymerisation erhalten. Man erwähnt die schlechte Verträglichkeit der Produkte und deren niedrige Funktionalität von 1,1 bzw. 1,6 und 2. Zur Verbesserung der Verträglichkeit wird die Umsetzung der Glycidether mit EPICURE 3140 Polyamid beschrieben.

Die Erfindung SU195104 (Kautschukinstitut Lebedev) beschreibt die Synthese eines anionischen Polybutadienpolymerisates zu einem "lebendem Polymer" mit Metallatomen der I-III-Gruppe und deren Behandlung mit Epichlorhydrin, Säuren und Basen. Das "lebende Polymer" wird vor der Umsetzung mit Epichlorhydrin nicht isoliert und von Butadienoligomeren befreit. Die Produkte werden mit Maleinsäureanhydrid und Phthalsäureanhydrid umgesetzt.

In C.M. Roland, Plateau modulus of epoxidized polybutadiene", Macromolecules, Bd. 26, Nr. 24, 1993, Seiten 6474-6476 wird die Epoxidierung von Polybutadien, dessen Mikrostruktur aus 49% trans-1,4, 41% cis-1,4 und 10% 1,2-Doppelbindungen besteht, beschrieben.

EP 1323739 beschreibt ein im Wesentlichen lösemittelfreies Verfahren zur Herstellung epoxidierter Polyalkenylene und Verwendung von Phosphonsäuren und deren Derivaten als Katalysator.

Die im Stand der Technik beschriebenen Verfahren zur Herstellung von Polybutadien mit Epoxygruppen weisen jedoch den Nachteil auf, dass das Polybutadien schwer zu verarbeiten ist, das es hohe Viskositäten und hohe Glasübergangstemperaturen aufweist. Weiterhin weisen die Produkte im Stand der Technik beschriebenen Verfahren zur Herstellung von Polybutadien mit Epoxygruppen eine schlechte Verträglichkeit mit anderen Komponenten von Beschichtungsmitteln auf, insbesondere Epoxidharzen.

Vor diesem Hintergrund besteht die der Erfindung zu Grunde liegende Aufgabe darin, ein Polybutadien mit Epoxygruppen und ein Verfahren zur dessen Herstellung bereitzustellen, das zur Verarbeitung günstigere Eigenschaften aufweist, insbesondere eine möglichst geringe Viskosität und/oder Glasübergangstemperatur.

Eine weitere der Erfindung zu Grunde liegende Aufgabe besteht darin, ein Polybutadien mit Epoxygruppen bereitzustellen, das eine möglichst gute Verträglichkeit mit anderen Komponenten von Beschichtungsmitteln, insbesondere Epoxidharzen aufweist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Das der Aufgabe zu Grunde liegende Problem wird in einem ersten Aspekt gelöst durch ein Polybutadien mit Epoxygruppengemäß Anspruch 1, wobei das Polybutadien die aus 1,3-Butadien abgeleiteten Monomereinheiten 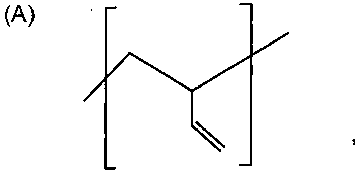 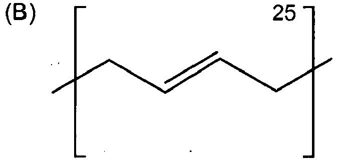 und 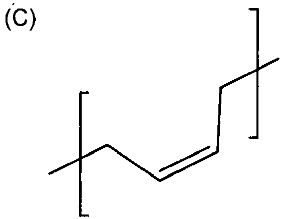 umfasst,
wobei der Anteil von A an der im Polybutadien enthaltenen aus 1,3-Butadien abgeleiteten Gesamtheit der Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

In einer ersten Ausführungsform des ersten Aspekts wird das Problem gelöst durch ein Polybutadien mit Epoxygruppen, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

In einer zweiten Ausführungsform des ersten Aspekts, bei der es sich auch um eine Ausführungsform der ersten Ausführungsform handelt, wird das Problem gelöst durch ein Polybutadien mit Epoxygruppen, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

In einer dritten Ausführungsform des ersten Aspekts, bei der es sich auch um eine Ausführungsform der ersten bis zweiten Ausführungsform handelt, wird das Problem gelöst durch ein Polybutadien mit Epoxygruppen, wobei die Epoxygruppen die Formel (I) 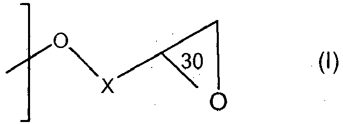 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

In einer vierten Ausführungsform des ersten Aspekts, bei der es sich auch um eine Ausführungsform der ersten bis dritten Ausführungsform handelt, wird das Problem gelöst durch ein Polybutadien mit Epoxygruppen, wobei das Polybutadien 1,5 bis 3, bevorzugt 1,75 bis 2,5 Epoxygruppen aufweist.

In einem zweiten Aspekt wird das der Erfindung zu Grunde liegende Problem gelöst durch ein Verfahren zur Herstellung eines Polybutadiens mit Epoxygruppen, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Monoepoxyverbindung in einer Reaktionsmischung,
   wobei das Molverhältnis zwischen endständigen Hydroxygruppen und der Monoepoxyverbindung 10:1 bis 1:10 beträgt,
   wobei die Temperatur 0 bis 150 °C beträgt,
   und wobei die Reaktionszeit 0,5 bis 24 Stunden beträgt.
c) Zugeben eines Alkalimetallhydroxids, Alkalimetallhydrogencarbonats oder Alkalimetallcarbonats zur Reaktionsmischung aus Schritt b),
wobei das Polybutadien mit endständigen Hydroxygruppen die aus 1,3-Butadien abgeleiteten Monomereinheiten 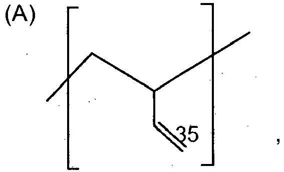 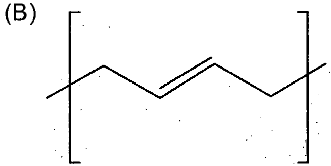 und 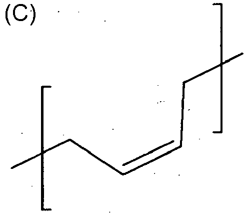 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt
wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt,
   wobei noch bevorzugter der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

In einer ersten Ausführungsform des zweiten Aspekts wird das Problem gelöst durch ein Verfahren, wobei die Monoepoxyverbindung aus der Gruppe ausgewählt ist, die Epihalohydrine, bevorzugt Epichlorhydrin, β-Methylepichlorhydrin oder Epibromhydrin, und Alkylenoxide, bevorzugt Ethylenoxid, 1,2-Propylenoxid oder 1,2-Butylenoxid, umfasst.

In einer zweiten Ausführungsform des zweiten Aspekts, bei der es sich auch um eine Ausführungsform der ersten Ausführungsform handelt, wird das Problem gelöst durch ein Verfahren, wobei das Molverhältnis zwischen der Monoepoxyverbindung und endständigen Hydroxygruppen in der Reaktionsmischung in Schritt b) 0,5 bis 2, bevorzugt 0,9 bis 1,2 beträgt.

In einer dritten Ausführungsform des zweiten Aspekts, bei der es sich auch um eine Ausführungsform der ersten bis zweiten Ausführungsform handelt, wird das Problem gelöst durch ein Verfahren, wobei Schritt b) in Anwesenheit eines Lösungsmittels abläuft, wobei das Lösungsmittel bevorzugt aus der Gruppe ausgewählt ist, die bei Raumtemperatur flüssige Aliphaten, Aromaten, Ester und Ether umfasst.

In einer vierten Ausführungsform des zweiten Aspekts, bei der es sich auch um eine Ausführungsform der ersten bis dritten Ausführungsform handelt, wird das Problem gelöst durch ein Verfahren, wobei Schritt b) in Anwesenheit wenigstens eines Metall- oder Halbmetallsalzes abläuft, das wenigstens ein Metall- oder Halbmetallkation, bevorzugt ausgewählt aus der Gruppe umfassen Bor, Aluminium, Zink und Zinn und wenigstens ein Anion umfasst, welches aus der Gruppe umfassend F⁻, Cl⁻, BF₄⁻, PF₆⁻, AsF₆⁻, SbF₆⁻, ClO₄⁻, IO₄⁻ und NO₃⁻ ausgewählt ist.

In einer fünften Ausführungsform des zweiten Aspekts, bei der es sich auch um eine Ausführungsform der ersten bis vierten Ausführungsform handelt, wird das Problem gelöst durch ein Verfahren, wobei in Schritt c) 0,7 bis 1,4 Mol Alkalimetallhydroxid, Alkalimetallhydrogencarbonats oder Alkalimetallcarbonats pro Mol endständiger Hydroxygruppen in Schritt a) zugegeben werden.

In einer sechsten Ausführungsform des zweiten Aspekts, bei der es sich auch um eine Ausführungsform der ersten bis fünften Ausführungsform handelt, wird das Problem gelöst durch ein Verfahren, weiter umfassend destillatives Entfernen von überschüssiger Monoepoxyverbindung nach Schritt b) und vor Schritt c).

In einer siebten Ausführungsform des zweiten Aspekts, bei der es sich um eine Ausführungsform der dritten bis sechsten Ausführungsform handelt, wird das Problem gelöst durch ein Verfahren, wobei Schritt b) in Anwesenheit eines Lösungsmittels durchgeführt und dieses vor, während oder nach Schritt c), bevorzugt nach Schritt c), von der Reaktionsmischung abgetrennt wird.

In einer achten Ausführungsform des zweiten Aspekts, bei der es sich um eine Ausführungsform der dritten bis siebten Ausführungsform handelt, wird das Problem gelöst durch ein Verfahren, wobei Schritt b) in Anwesenheit von Inertgas abläuft.

In einem dritten Aspekt wird das der Erfindung zu Grunde liegende Problem gelöst durch eine Zusammensetzung umfassend das Polybutadien mit Epoxygruppen nach dem ersten Aspekt oder einer Ausführungsform des ersten Aspekts oder das nach dem Verfahren nach dem zweiten Aspekt oder einer Ausführungsform des zweiten Aspekts hergestellte Polybutadien mit Epoxygruppen sowie wenigstens einen Härter, optional zusätzlich wenigstens ein Epoxydharz.

In einem vierten Aspekt wird das der Erfindung zu Grunde liegende Problem gelöst durch ein Bindemittel in Kleb-, Dicht- und Akustikmassen für Automobilanwendungen, Gießharzformulierungen für Elektroisolation, Dichtmassen für Baustoffe, zur Imprägnierung oder Verklebung von Glas- und Kohlefasergewebe umfassend das Polybutadien mit endständigen Epoxygruppen nach dem ersten Aspekt oder einer Ausführungsform des ersten Aspekts oder das nach dem Verfahren nach dem zweiten Aspekt oder einer Ausführungsform des zweiten Aspekts hergestellte Polybutadien mit endständigen Epoxygruppen und wenigstens einen Härter, optional zusätzlich wenigstens ein Epoxydharz.

In einem fünften Aspekt wird das der Erfindung zu Grunde liegende Problem gelöst durch eine Verwendung des Polybutadiens mit endständigen Epoxygruppen nach dem ersten Aspekt oder einer Ausführungsform des ersten Aspekts oder des nach dem Verfahren nach dem zweiten Aspekt oder einer Ausführungsform des zweiten Aspekts hergestellten Polybutadiens mit endständigen Epoxygruppen oder der Zusammensetzung nach dem dritten Aspekt als Bindemittel in Kleb-, Dicht- und Akustikmassen für Automobilanwendungen, in Gießharzformulierungen für Elektroisolation, in Dichtmassen für Baustoffe, zur Imprägnierung oder Verklebung von Glas- und Kohlefasergewebe.

In einem fünften Aspekt wird das der Erfindung zu Grunde liegende Problem gelöst durch ein Verfahren umfassend den Schritt Aushärten der Zusammensetzung nach dem dritten Aspekt.

Die vorliegende Erfindung basiert auf der überraschenden Erkenntnis, dass ausgehend von mittels einer radikalischen Polymerisation erhaltenem Polybutadien hergestelltes Polybutadien mit Epoxygruppen eine geringe Viskosität und Glasübergangstemperatur aufweist. Ohne an eine bestimmte Theorie gebunden sein zu wollen, vermuten die Erfinder der vorliegenden Erfindung, dass die radikalische Polymerisation gegenüber einer anionischen Polymerisation von Butadien zu einem Polybutadien mit einem hohen Gehalt an 1.2-Vinyl als Monomerbaustein am Polymer führt und dass dieses Monomer für die genannten Eigenschaften ursächlich ist.

Die vorliegende Erfindung betrifft durch radikalische Polymerisation von 1,3-Butadien erzeugtes Polybutadien mit Hydroxygruppen und daraus hergestelltes Polybutadien mit Epoxygruppen gemäß Anspruch 1, jeweils umfassend die im Polybutadien enthaltenen aus 1,3-Butadien abgeleiteten Monomereinheiten A), B) und C), wobei eine eckige Klammer bei der in dieser Anmeldung gewählten formelmäßigen Darstellung der im Polybutadien enthaltenen aus 1,3-Butadien abgeleiteten Monomereinheiten A), B) und C) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer anderen funktionellen Gruppe, insbesondere einer Hydroxygruppe oder Epoxygruppe, verbunden ist. Die Monomereinheiten A), B) und C) können dabei in beliebiger Reihenfolge im Polymer angeordnet sein. Bevorzugt ist eine statistische Anordnung.

In einer bevorzugten Ausführungsform können neben den im Polybutadien enthaltenen aus 1,3-Butadien abgeleiteten Monomereinheiten A), B) und C) auch noch andere Monomereinheiten enthalten sein, insbesondere solche, die nicht aus 1,3-Butadien abgeleitet sind. In einer bevorzugtesten Ausführungsform stellt die Gesamtheit der im Polybutadien enthaltenen aus 1,3-Butadien abgeleiteten Monomereinheiten A), B) und C) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Das erfindungsgemäße oder nach dem erfindungsgemäßen Verfahren hergestellte Polybutadien mit Epoxygruppen ist nahezu farblos und weist eine niedrige Viskosität auf. Die Viskosität wird bevorzugt bei 20 °C mit dem Rotationsviskosimeter der Firma Haake ermittelt.

Das erfindungsgemäße oder nach dem erfindungsgemäßen Verfahren hergestellte Polybutadien mit Epoxygruppen weist in einer bevorzugten Ausführungsform eine mittlere Funktionalität von 1,5 bis 3, bevorzugt 1,75 bis 2,5 auf.. Dies bedeutet in einer noch bevorzugten Ausführungsform, dass ein Polybutadienmolekül unabhängig von seiner Länge durchschnittlich 1,5 bis 3, bevorzugt 1,75 bis 2,5 Epoxygruppen aufweist.

Das erfindungsgemäße Verfahren erfordert als Schritt a) das Bereitstellen eines mittels radikalischer Polymerisation hergestellten Polybutadiens mit Hydroxygruppen. Ein derartiges Polybutadien mit Hydroxygruppen kann beispielsweise durch Polymerisation von 1,3-Butadien in Anwesenheit von Wasserstoffperoxid, Wasser und einem organischen Lösungsmittel hergestellt werden, wie es in der EP12169794.0 beschrieben ist. In einer bevorzugten Ausführungsform wird unter dem Begriff "Polybutadien", wie hierin verwendet, ein durch Polymerisation von Monomereinheiten mit jeweils wenigstens zwei konjugierten Doppelbindungen verstanden, wobei es sich in Reihenfolge zunehmender Bevorzugung bei wenigstens 80, 85, 90, 95, 98, 99 oder 99,9 % der Monomereinheiten um 1,3-Butadien handelt.

In Schritt b) des erfindungsgemäßen Verfahrens wird das Polybutadien mit Hydroxygruppen mit einer Monoepoxyverbindung in Anwesenheit von Inertgas umgesetzt. Als Monoepoxyverbindung eignet sich besonders ein Epihalohydrin, bevorzugt aus der Gruppe ausgewählt, die Epichlorhydrin, Beta-Methylepichlorhydrin oder Epibromhydrin umfasst, sowie einem Alkylenoxid, bevorzugt aus der Gruppe ausgewählt, die Ethylenoxid, 1,2-Propylenoxid und 1,2-Butylenoxid umfasst. Bevorzugt wird Epichlorhydrin in einer Menge von 0,5 und 2 Mol Epichlorhydrin pro Äquivalent an einem Polybutadien gebundener Hydroxygruppe eingesetzt. Besonders bevorzugt wird 0,9 bis 1,2 Mol Epichlorhydrin pro Äquivalent an einem Polybutadien gebundener Hydroxygruppe eingesetzt.

In einer bevorzugten Ausführungsform läuft Schritt b) in einem Lösungsmittel ab. In einer bevorzugten Ausführungsform handelt es sich bei dem Lösungsmittel um einen bei der Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Disiopropylether, Dioxan und Tetrahydrofuran. Art und Menge des Lösungsmittels ist abhängig vom eingesetzten Polybutadien mit Hydroxygruppen und der Menge der der Monoepoxyverbindung. Lösungsmittelgemische der genannten Lösungsmittel sind in beliebigen Mengenverhältnissen möglich. Der Anteil der Summe von Polybutadien mit Hydroxygruppen und Monoepoxyverbindung im Reaktionsgemisch kann jeweils zwischen 5 und 80 Gewichtsprozent betragen.

Die Reaktion wird in Anwesenheit eines Inertgases bei reduziertem oder erhöhtem Druck durchgeführt. In einer bevorzugten Ausführungsform bedeutet der Begriff "Inertgas", wie hierin verwendet, ein Gas oder Gasgemisch, das in seiner Gesamtheit reaktionsträge ist. Bevorzugt handelt es sich bei dem Inertgas um Stickstoff, Edelgase oder Mischungen davon.

Bevorzugt dauert Schritt b) 0,5 bis 24 Stunden an.

Die Temperatur in Schritt b) beträgt 0 bis 150, bevorzugt 0 bis 70 °C.

Beim Starten der Reaktion in Schritt b) kann sowohl das Polybutadien mit Hydroxygruppen als auch das Monoepoxyverbindung vorgelegt werden. Alternativ können auch beide Verbindungen gemeinsam vorgelegt werden. Danach wird das Reaktionsgemisch durch Aufheizen auf die Reaktionstemperatur gebracht.

Schritt b) läuft bevorzugt in Anwesenheit eines Metall- oder Halbmetallsalzes als Katalysator ab. Dabei handelt es sich um wenigstens ein Metall der Haupt- oder Nebengruppen des Periodensystems , bevorzugt ausgewählt aus der Gruppe umfassen Bor, Aluminium, Zink und Zinn ,und wenigstens ein Anion aus der Gruppe umfassend F⁻, Cl⁻, BF₄⁻, PF₆⁻, AsF₆⁻, SbF₆⁻, ClO₄⁻, IO₄⁻, und NO₃⁻ Die Einsatzmenge des Katalysators beträgt bevorzugt zwischen 0,001 bis 0,5 Mol des Metallsalzes pro Äquivalent an einem Polybutadien gebundener Hydroxygruppe. Es können die Reaktionskomponenten und der Katalysator vorgelegt und dann zur Reaktion gebracht werden. Vorzugsweise wird der Metallsalzkatalysator mit dem Polybutadien mit Hydroxygruppen vorgelegt und danach wird die Monoexypoverbindung, bevorzugt Epihalohydrin, hinzugegeben.

Bevorzugt wird überschüssige Monoexypoverbindung nach Schritt b) destillativ entfernt, wobei das Lösungsmittel bevorzugt erst nach dieser Entfernung der überschüssigen Monoexypoverbindung hinzugegeben wird.

In Schritt c) erfolgt eine Dehydrohalogenierung durch Zugabe wenigstens eines Alkalimetallhydroxids als Base zur Bildung des Alkalimetallhalogenids zur Reaktionsmischung aus Schritt b). In einer bevorzugten Ausführungsform beträgt die Menge des zugegebenen Alkalimetallhydroxids zwischen 0,7 bis 1,4 Mol pro Äquivalent an einem Polybutadien gebundener Hydroxygruppe eingesetzt. Die Temperatur in Schritt c) sollte zwischen 0 und 80 °C liegen.

Das erfindungsgemäße Polybutadien mit Epoxygruppen kann erfindungsgemäß in einer Zusammensetzung umfassend das Polybutadien mit Epoxygruppen sowie wenigstens einen Härter, optional zusätzlich wenigstens ein Epoxydharz, verwendet werden.

In einer bevorzugten Ausführungsform wird unter dem Begriff "Epoxidharz", wie hierin verwendet, ein Prepolymer verstanden, das pro Molekül zwei oder mehr Epoxygruppen aufweist. Die Reaktion dieser Harze mit einer Reihe von Vernetzern, auch als Härter bezeichnet, führt zu vernetzten Polymeren. Diese Polymere können duroplastisch sein und können in den Bereichen z. B. Civil. Engineering (Bauwesen), besonders in Industrieböden, Abdichtungen und Betonsanierungsprodukten, Composites (Faserverbundwerkstoffe), Vergussmassen, Lacke und Klebstoffen, Verwendung finden. Ein Überblick über die Harze und Härter sowie deren Verwendung im Bereich Civil Engineering einschließlich ihrer Eigenschaften findet sich in H. Schuhmann, "Handbuch Betonschutz durch Beschichtungen", Expert Verlag 1992, Seite 396 - 428. Der Einsatz der Harze und Härter für den Bereich Composites wird in P. K. Mallick, "Fiber-Reinforced Composites, Materials, Manufacturing, and Design", CRC Press, Seite 60 - 76 beschrieben. Als Epoxidharz kommen erfindungsgemäß alle Epoxidharze in Frage, die mit Aminen gehärtet werden können. Zu den Epoxidharzen zählen z. B. Polyepoxide auf Basis von Bisphenol A-diglycidylether, Bisphenol F-diglycidylether oder cycloaliphatische Typen wie z. B. 3,4-Epoxycyclohexyl-epoxyethan oder 3,4-Epoxycyclohexylmethyl-3,4-epoxy-cyclohexancarboxylat. Vorzugsweise wird in der erfindungsgemäßen Zusammensetzung wenigstens ein Epoxidharz eingesetzt, das aus der Gruppe auswählt ist, die Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexan-carboxylat umfasst, wobei Bisphenol A basierte Epoxidharze und Bisphenol F basierte Epoxidharze besonders bevorzugt sind. Derartige Verbindungen sind im Handel erhältlich.

Als Härter kommen sämtliche im Stand der Technik für härtbare Zusammensetzungen umfassend wenigstens eine Epoxyverbindung beschriebene Härter in Frage, insbesondere aminhaltige Härter, die mindestens zwei oder mehr primäre und/oder sekundäre Aminogruppen aufweisen, z. B. Diethylentriamin, Triethylentetramin, Methylendianilin, Bis(aminocyclohexyl)methan, 3,3'-Dimethyl-4,4'-diaminodicyclohexyl-methan, Tricyclo-dodecandiamin, Norbornandiamin, N Aminoethylpiperazin, Isophorondiamin, m-Phenylenbis(methylamin), 1,3- und/oder 1,4-Bis(aminomethyl)cyclohexan, Trimethylhexamethylendiamin, Polyoxyalkylenamine, Polyaminoamide, und Umsetzungsprodukte von Aminen mit Acrylnitril und Mannichbasen, weiterhin ein Polyamin ausgewählt aus der Gruppe enthaltend Isophorondiamin, Diethylentriamin, Trimethylhexamethylen-diamin, m-Phenylenbis(methylamin), 1,3-Bis(aminomethyl)-cyclohexan, Methylen-bis(4-aminocyclohexan), 3,3'-Dimethyl-4,4'-diaminodicyclohexyl-methan, N-Aminoethyl-piperazin, Polyoxyalkylenamine, Polyaminoamide, Umsetzungsprodukte von Aminen mit Acrylnitril und Mannichbasen.

Neben dem Polybutadien mit Epoxygruppen, dem Härter, optional dem Epoxidharz kann die erfindungsgemäße Zusammensetzung weitere Verbindungen umfassen, insbesondere ein Lösungsmittel, z.B. Xylol oder iso-Propanol, wenigstens einen Reaktionsbeschleuniger, bevorzugt aus der Gruppe organischer Säuren oder tertiärer Amine, z.B. Salicylsäure, Aminoethylpiperazin, Tris-(N,N-dimethylaminomethyl)-phenol, weiterhin Pigmente, Füllstoffe und/oder Additive, einen Reaktivverdünner, der bevorzugt aus der Gruppe mono-, bi- oder polyfunktioneller, bei Raumtemperatur flüssiger Epoxidverbindungen ausgewählt ist, z. B. Butylglycidether, 1,6-Hexan- und 1,4-Butandiglycidether, Neopentyldiglycidether, Phenylglycidether, Glycidether der Versatic-Säure, C12-C14-Glycidether, C13-C15-Glycidether, p-tert-Butyl-Phenylglycidether, Neopently-glykoldiglycidether, Polybutylendiglycidether, Glycerintriglycidether, Pentaerythropoly-glycidether, Trimethylolpropantriglycidether und Kresylglycidether, schließlich ein Modifizierungsmittel wie Benzylalkohol, Cumaron-Harz oder reaktive Kautschuke.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiele:

Die Polybutadiene mit Hydroxygruppen Polyvest EP HT und Poly bd R-20LM (Fa. Cray Valley) und deren Eigenschaften werden stellvertretend einem Referenzprodukt aus anionischer Polymerisation (NISSO-PB G1000, Fa. Nippon Soda) gegenübergestellt.

Die Synthese des Polyvest EP HT mit den unten aufgelisteten Spezifikationen erfolgt gemäß der in der Patentschrift EP12169794.0 beschriebenen Synthesevorschrift..

Beide Produkte, Polyvest EP HT und Poly bd R-20LM, wurden für die Herstellung der Polybutadiene mit Epoxygruppen genutzt.

### Auswahl der Polybutadiene mit Hydroxygruppen

| | **POLYVEST EP HT** | **Poly bd R-20LM** | **NISSO-PB G-1000** |
|---|---|---|---|
| Viskosität 23 °C [Pa s] | 7,61 | 2,53 | 109,53 |
| Sterische Verteilung | | | |
| 1,2-vinyl [%] | 22 | 22 | 89 |
| 1,4-trans [%] | 58 | 58 | 11 |
| 1,4-cis [%] | 20 | 20 | - |
| Molgewicht Mn [g/mol] | 3397 | 1812 | 2077 |
| OH-Zahl [mg KOH/g] | 48 | 96 | 77,7 |
| Tg-Wert [°C] | -80 | -75 | -26 |

### Beispiel 1:

116,8 g (0,1 Mol OH-Äquivalent) Polyvest EP HT gelöst in 83,2 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, filtriert und vom Lösemittel im Vakuum abgetrennt. 112 g (91,5 % der Theorie) des nahezu farblosen Polybutadienglycidylethers mit einem Äquivalentgewicht von 1840 konnten isoliert werden. Das Produkt hat eine mit dem Rotationsviskosimeter ermittelte Viskosität von 14 Pa s bei 20 °C. Der ermittelte Tg-Wert ist - 78 °C. Die Mikrostruktur des eingesetzten Polybutadiens mit Hydroxygruppen bleibt erhalten (22 % 1,2-vinyl, 20 % 1,4-cis, 58 % 1,4-trans).

### Beispiel 2:

58,4 g (0,1 Mol OH-Äquivalent) Poly bd R-20LM gelöst in 41,6 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, erneut filtriert und vom Lösemittel im Vakuum abgetrennt. 56,3 g (87,9 % der Theorie) des nahezu farblosen Polybutadienglycidylethers mit einem Äquivalentgewicht von 1010 konnten isoliert werden. Das Produkt hat eine mit dem Rotationsviskosimeter ermittelte Viskosität von 4,2 Pa s bei 20 °C. Der ermittelte Tg-Wert ist -71 °C. Die Mikrostruktur des eingesetzten Polybutadiens mit Hydroxygruppen bleibt erhalten (22 % 1,2-vinyl, 20 % 1,4-cis, 58 % 1,4-trans)

### Beispiel 3

58,4 g (0,1 Mol OH-Äquivalent) Poly bd R-20LM gelöst in 41,6 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt und mit 50 g Toluol versetzt. Durch azeotrope Destillation wird Wasser aus dem Reaktionsgemisch entfernt. Das Reaktionsgemisch wird über MgSO4 filtriert und vom Lösemittel im Vakuum befreit. 58,9 g (92,0 % der Theorie) des nahezu farblosen Polybutadienglycidylethers mit einem Äquivalentgewicht von 1005 konnten isoliert werden. Das Produkt hat eine mit dem Rotationsviskosimeter ermittelte Viskosität von 4 Pa s bei 20 °C. Der ermittelte Tg-Wert ist -71 °C. Die Mikrostruktur des eingesetzten Polybutadiens mit Hydroxygruppen bleibt erhalten (22 % 1,2-vinyl, 20 % 1,4-cis, 58 % 1,4-trans).

## Patentansprüche

1. Polybutadien mit Epoxygruppen, wobei das Polybutadien die aus 1,3-Butadien abgeleiteten Monomereinheiten 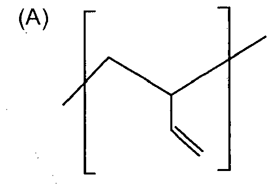 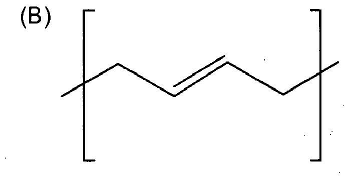 und 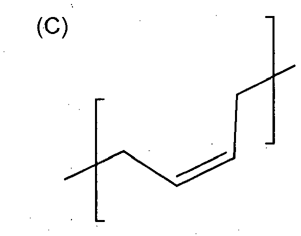 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt,
wobei die Epoxygruppen die Formel (I) 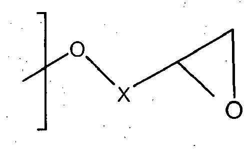 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

2. Polybutadien nach Anspruch 1, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

3. Polybutadien nach einem der Ansprüche 1 bis 2, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

4. Polybutadien nach einem der Ansprüche 1 bis 3, wobei das Polybutadien, unabhängig von seiner Länge durchschnittlich 1,5 bis 3, bevorzugt 1,75 bis 2,5 Epoxygruppen aufweist.

5. Verfahren zur Herstellung eines Polybutadiens mit Epoxygruppen, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Monoepoxyverbindung in einer Reaktionsmischung,
wobei das Molmassenverhältnis zwischen endständigen Hydroxygruppen und der Monoepoxyverbindung 10:1 bis 1:10 beträgt,
wobei die Temperatur 0 bis 150 °C beträgt,
und wobei die Reaktionszeit 0,5 bis 24 Stunden beträgt.
c) Zugeben eines Alkalimetallhydroxids, Alkalimetallhydrogencarbönats oder Alkalimetallcarbonats zur Reaktionsmischung aus Schritt b),
wobei das Polybutadien mit endständigen Hydroxygruppen die Monomereinheiten 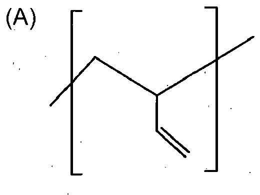 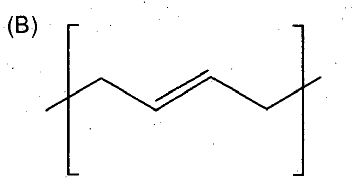 und 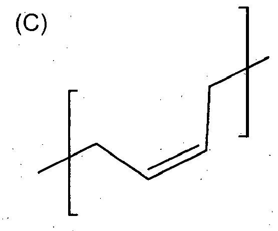 umfasst,
wobei der Anteil von A an der Gesamtheit der im Polybutadien enthaltenen aus 1,3-Butadien abgeleiteten Monomereinheiten 10 bis 60 Molprozent beträgt,
wobei die Summe der Anteile von B und C an der Gesamtheit der im Polybutadien enthaltenen aus 1,3-Butadien abgeleiteten Monomereinheiten 40 bis 90 Molprozent beträgt,
wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt,
wobei noch bevorzugter der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

6. Verfahren nach Anspruch 5, wobei die Monoepoxyverbindung aus der Gruppe ausgewählt ist, die Epihalohydrine, bevorzugt Epichlorhydrin, β-Methylepichlorhydrin oder Epibromhydrin, und Alkylenoxide, bevorzugt Ethylenoxid, 1,2-Propylenoxid oder 1,2-Butylenoxid, umfasst.

7. Verfahren nach einem der Ansprüche 5 bis 6, wobei das Molmassenverhältnis zwischen der Monoepoxyverbindung und endständigen Hydroxygruppen in der Reaktionsmischung in Schritt b) 0,5 bis 2, bevorzugt 0,9 bis 1,2 beträgt.

8. Verfahren nach einem der Ansprüche 5 bis 7, wobei Schritt b) in Anwesenheit eines Lösungsmittels abläuft, wobei das Lösungsmittel bevorzugt aus der Gruppe ausgewählt ist, die bei Raumtemperatur flüssige Aliphaten, Aromaten, Ester und Ether umfasst.

9. Verfahren nach einem der Ansprüche 5 bis 8, wobei Schritt b) in Anwesenheit wenigstens eines Metall- oder Halbmetallsalzes abläuft, das wenigstens ein Metall- oder Halbmetallkation, bevorzugt ausgewählt aus der Gruppe umfassen Bor, Aluminium, Zink und Zinn und wenigstens ein Anion umfasst, welches aus der Gruppe umfassend F⁻,Cl⁻, BF₄⁻, PF₆⁻, AsF₆⁻, SbF₆⁻; ClO₄⁻, IO₄⁻ und NO₃⁻ ausgewählt ist.

10. Verfahren nach einem der Ansprüche 5 bis 9, wobei in Schritt c) 0,7 bis 1,4 Mol Alkalimetallhydroxid, Alkalimetallhydrogencarbonats oder Alkalimetallcarbonats pro Mol endständiger Hydroxygruppen in Schritt a) zugegeben werden.

11. Verfahren nach einem der Ansprüche 5 bis 10, weiter umfassend destillatives Entfernen von überschüssiger Monoepoxyverbindung nach Schritt b) und vor Schritt c).

12. Verfahren nach einem der Ansprüche 8 bis 11, wobei Schritt b) in Anwesenheit eines Lösungsmittels durchgeführt und dieses vor, während oder nach Schritt c), bevorzugt nach Schritt c) von der Reaktionsmischung abgetrennt wird.

13. Verfahren nach einem der Ansprüche 8 bis 12, wobei Schritt b) in Anwesenheit von Inertgas abläuft.

14. Zusammensetzung umfassend das Polybutadien mit Epoxygruppen nach einem der Ansprüche 1 bis 4 oder des nach dem Verfahren nach einem der Ansprüche 5 bis 13 hergestelltes Polybutadien mit Epoxygruppen sowie wenigstens einen Härter, optional zusätzlich wenigstens ein Epoxydharz.

15. Bindemittel in Kleb-, Dicht- und Akustikmassen für Automobilanwendungen, Gießharzformulierungen für Elektroisolation, Dichtmassen für Baustoffe, zur Imprägnierung oder Verklebung von Glas- und Kohlefasergewebe umfassend das Polybutadien mit endständigen Epoxygruppen nach einem der Ansprüche 1 bis 4 oder das nach dem Verfahren nach einem der Ansprüche 5 bis 13 hergestellte Polybutadien mit endständigen Epoxygruppen und bevorzugt wenigstens einen Härter, optional zusätzlich wenigstens ein Epoxydharz.

16. Verwendung des Polybutadiens mit endständigen Epoxygruppen nach einem der Ansprüche 1 bis 4 oder des nach dem Verfahren nach einem der Ansprüche 5 bis 13 hergestellten Polybutadiens mit endständigen Epoxygruppen oder der Zusammensetzung nach Anspruch 15 als Bindemittel in Kleb-, Dicht- und Akustikmassen für Automobilanwendungen, in Gießharzformulierungen für Elektroisolation, in Dichtmassen für Baustoffe, zur Imprägnierung oder Verklebung von Glas- und Kohlefasergewebe.

17. Verfahren umfassend den Schritt Aushärten der Zusammensetzung nach Anspruch 14.

## Claims

1. Polybutadiene having epoxy groups, where the polybutadiene comprises the following 1,3-butadiene-derived monomer units: 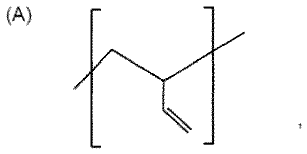 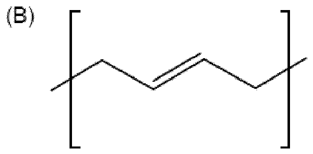 and 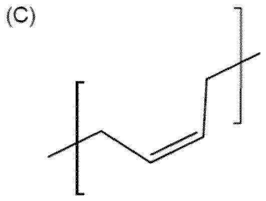 where the proportion of A in the entirety of the 1,3-butadiene-derived monomer units present in the polybutadiene is from 10 to 60 mol per cent,
and where the sum of the proportions of B and C in the entirety of the 1,3-butadiene-derived monomer units present in the polybutadiene is from 40 to 90 mol per cent,
where the epoxy groups have the 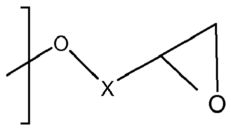 formula (I)
and X represents a linear or branched alkylene group, preferably a linear alkylene group of the formula -(CH₂)ₓ-, where x is from 1 to 4, more preferably 1.

2. Polybutadiene according to Claim 1, where the proportion of A, B and C in the entirety of the 1,3-butadiene-derived monomer units present in the polybutadiene is in each case and mutually independently at least 10%.

3. Polybutadiene according to Claim 1 or 2, where the proportion of A in the entirety of the 1,3-butadiene-derived monomer units present in the polybutadiene is from 15 to 30 mol per cent, the proportion of B in the entirety of the 1,3-butadiene-derived monomer units present in the polybutadiene is from 50 to 70 mol per cent, and the proportion of C in the entirety of the 1,3-butadiene-derived monomer units present in the polybutadiene is from 15 to 30 mol per cent.

4. Polybutadiene according to any of Claims 1 to 3, where the polybutadiene has, irrespective of its length, an average of from 1.5 to 3 epoxy groups, preferably from 1.75 to 2.5.

5. Process for the production of a polybutadiene having epoxy groups, comprising the following steps:
a) provision of a polybutadiene produced by means of free-radical polymerization and having hydroxy groups,
b) reaction of the polybutadiene having hydroxy groups from step a) with a monoepoxy compound in a reaction mixture,
where the molar mass ratio between terminal hydroxy groups and the monoepoxy compound is from 10:1 to 1:10,
where the temperature is from 0 to 150°C,
and where the reaction time is from 0.5 to 24 hours,
c) addition of an alkali metal hydroxide, alkali metal hydrogencarbonate or alkali metal carbonate to the reaction mixture from step b),
where the polybutadiene having terminal hydroxy groups comprises the following monomer units: 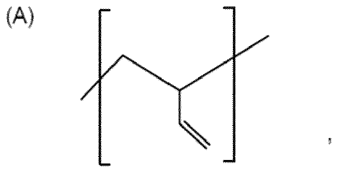 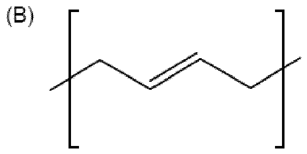 and 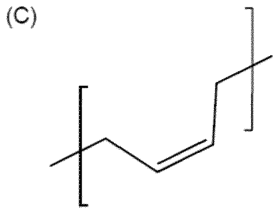 where the proportion of A in the entirety of the 1,3-butadiene-derived monomer units present in the polybutadiene is from 10 to 60 mol per cent,
and where the sum of the proportions of B and C in the entirety of the 1,3-butadiene-derived monomer units present in the polybutadiene is from 40 to 90 mol per cent,
where the proportion of A, B and C in the entirety of the 1,3-butadiene-derived monomer units present in the polybutadiene is respectively and mutually independently preferably at least 10%,
where more preferably the proportion of A in the entirety of the 1,3-butadiene-derived monomer units present in the polybutadiene is from 15 to 30 mol per cent, the proportion of B in the entirety of the 1,3-butadiene-derived monomer units present in the polybutadiene is from 50 to 70 mol per cent and the proportion of C in the entirety of the 1,3-butadiene-derived monomer units present in the polybutadiene is from 15 to 30 mol per cent.

6. Process according to Claim 5, where the monoepoxy compound is selected from the group consisting of the epihalohydrins, preferably epichlorohydrin, β-methylepichlorohydrin or epibromohydrin, and alkylene oxides, preferably ethylene oxide, propylene 1,2-oxide or butylene 1,2-oxide.

7. Process according to Claim 5 or 6, where the molar mass ratio between the monoepoxy compound and terminal hydroxy groups in the reaction mixture in step b) is from 0.5 to 2, preferably 0.9 to 1.2.

8. Process according to any of Claims 5 to 7, where step b) proceeds in the presence of a solvent, where the solvent is preferably selected from the group consisting of the room-temperature-liquid aliphatics, aromatics, esters and ethers.

9. Process according to any of Claims 5 to 8, where step b) proceeds in the presence of at least one metal salt or semimetal salt which comprises at least one metal cation or semimetal cation, preferably selected from the group consisting of boron, aluminium, zinc and tin and at least one anion selected from the group consisting of F⁻, Cl⁻, BF₄⁻, PF₆⁻, AsF₆⁻, SbF₆⁻, ClO₄⁻, IO₄⁻ and NO₃⁻.

10. Process according to any of Claims 5 to 9, where, in step c), from 0.7 to 1.4 mol of alkali metal hydroxide, alkali metal hydrogencarbonate or alkali metal carbonate are added per mole of terminal hydroxy groups in step a).

11. Process according to any of Claims 5 to 10, further comprising distillative removal of excess monoepoxy compound after step b) and before step c).

12. Process according to any of Claims 8 to 11, where step b) is carried out in the presence of a solvent and this is removed from the reaction mixture before, during or after step c), preferably after step c).

13. Process according to any of Claims 8 to 12, where step b) proceeds in the presence of inert gas.

14. Composition comprising the polybutadiene having epoxy groups according to any of Claims 1 to 4 or the polybutadiene which has epoxy groups and has been produced by the process according to any of Claims 5 to 13, and also comprising at least one hardener, and optionally also at least one epoxy resin.

15. Binders in adhesive compositions, sealing compositions and acoustic compositions for automobile applications, casting-resin formulations for electrical insulation, sealing compositions for construction materials, for the impregnation or adhesive bonding of glass- and carbon-fibre textiles comprising the polybutadiene having terminal epoxy groups according to any of Claims 1 to 4 or the polybutadiene which has terminal epoxy groups and has been produced according to any of Claims 5 to 13, and preferably comprising a hardener, and optionally also at least one epoxy resin.

16. Use of the polybutadiene having terminal epoxy groups according to any of Claims 1 to 4 or of the polybutadiene which has terminal epoxy groups and which has been produced by the process according to any of Claims 5 to 13, or of the composition according to Claim 15, as binder in adhesive compositions, sealing compositions and acoustic compositions for automobile applications, in casting-resin formulations for electrical insulation, in sealing compositions for construction materials, for the impregnation or adhesive bonding of glass- and carbon-fibre textiles.

17. Process comprising the step of hardening of the composition according to Claim 14.

## Revendications

1. Polybutadiène à groupes époxy, le polybutadiène comprenant les motifs monomères dérivés de 1,3-butadiène 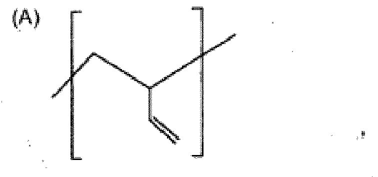 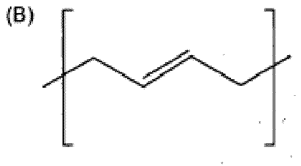 et 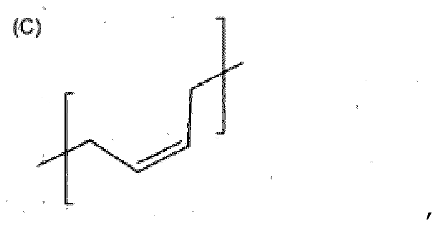 la proportion de A par rapport à la totalité des motifs monomères dérivés de 1,3-butadiène contenus dans le polybutadiène valant de 10 à 60 pour cent en moles,
et la somme des proportions de B et C par rapport à la totalité des motifs monomères dérivés de 1,3-butadiène contenus dans le polybutadiène valant de 40 à 90 pour cent en moles,
les groupes époxy présentant la formule (I) 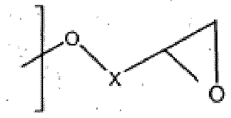 et X représentant un groupe alkylène linéaire ou ramifié, de préférence un groupe alkylène linéaire de formule -(CH₂)ₓ-, x valant de 1 à 4, encore mieux 1.

2. Polybutadiène selon la revendication 1, dans lequel la proportion de A, B et C par rapport à la totalité des motifs monomères dérivés de 1,3-butadiène contenus dans le polybutadiène vaut pour chacun et chacun indépendamment au moins 10 %.

3. Polybutadiène selon l'une quelconque des revendications 1 et 2, dans lequel la proportion de A par rapport à la totalité des motifs monomères dérivés de 1,3-butadiène contenus dans le polybutadiène vaut de 15 à 30, la proportion de B par rapport à la totalité des motifs monomères dérivés de 1,3-butadiène contenus dans le polybutadiène vaut de 50 à 70 et la proportion de C par rapport à la totalité des motifs monomères dérivés de 1,3-butadiène contenus dans le polybutadiène vaut de 15 à 30 pour cent en moles.

4. Polybutadiène selon l'une quelconque des revendications 1 à 3, le polybutadiène comportant indépendamment de sa longueur en moyenne 1,5 à 3, de préférence 1,75 à 2,5 groupes époxy.

5. Procédé pour la préparation d'un polybutadiène à groupes époxy, comprenant les étapes
a) obtention d'un polybutadiène à groupes hydroxy, produit par polymérisation radicalaire,
b) mise en réaction du polybutadiène à groupes hydroxy provenant de l'étape a) avec un composé monoépoxy dans un mélange réactionnel,
le rapport des masses molaires entre les groupes hydroxy en bout de chaîne et le composé monoépoxy valant de 10:1 à 1:10,
la température valant de 0 à 150 °C,
et la durée de la réaction allant de 0,5 à 24 heures,
c) addition d'un hydroxyde de métal alcalin, hydrogénocarbonate de métal alcalin ou carbonate de métal alcalin au mélange réactionnel provenant de l'étape b),
le polybutadiène à groupes hydroxy en bout de chaîne comprenant les motifs monomères 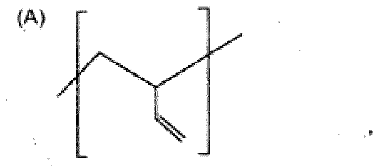 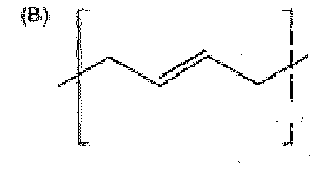 et 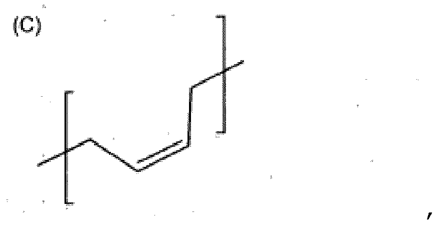 la proportion de A par rapport à la totalité des motifs monomères dérivés de 1,3-butadiène contenus dans le polybutadiène valant de 10 à 60 pour cent en moles,
la somme des proportions de B et C par rapport à la totalité des motifs monomères dérivés de 1,3-butadiène contenus dans le polybutadiène valant de 40 à 90 pour cent en moles,
la proportion de A, B et C par rapport à la totalité des motifs monomères dérivés de 1,3-butadiène contenus dans le polybutadiène valant pour chacun et chacun indépendamment au moins 10 %,
de façon encore plus particulièrement préférée la proportion de A par rapport à la totalité des motifs monomères dérivés de 1,3-butadiène contenus dans le polybutadiène valant de 15 à 30, la proportion de B par rapport à la totalité des motifs monomères dérivés de 1,3-butadiène contenus dans le polybutadiène valant de 50 à 70 et la proportion de C par rapport à la totalité des motifs monomères dérivés de 1,3-butadiène contenus dans le polybutadiène valant de 15 à 30 pour cent en moles.

6. Procédé selon la revendication 5, dans lequel le composé monoépoxy est choisi dans le groupe qui comprend des épihalogénohydrines, de préférence l'épichlorhydrine, la β-méthylépichlorhydrine ou l'épibromhydrine, et des oxydes d'alkylène, de préférence l'oxyde d'éthylène, l'oxyde de 1,2-propylène ou l'oxyde de 1,2-butylène.

7. Procédé selon l'une quelconque des revendications 5 et 6, dans lequel le rapport des masses molaires entre le composé monoépoxy et les groupes hydroxy en bout de chaîne dans le mélange réactionnel dans l'étape b) vaut de 0,5 à 2, de préférence de 0,9 à 1,2.

8. Procédé selon l'une quelconque des revendications 5 à 7, dans lequel l'étape b) se déroule en présence d'un solvant, le solvant étant choisi de préférence dans le groupe qui comprend des composés aliphatiques, composés aromatiques, esters et éthers, liquides à la température ambiante.

9. Procédé selon l'une quelconque des revendications 5 à 8, dans lequel l'étape b) se déroule en présence d'au moins un sel de métal ou de métalloïde, qui comprend au moins un cation de métal ou métalloïde, de préférence choisi dans le groupe comprenant le bore, l'aluminium, le zinc et l'étain, et au moins un anion qui est choisi dans le groupe comprenant F⁻, Cl⁻, BF₄⁻ , PF₆⁻, AsF₆⁻, SbF₆⁻, ClO₄⁻, IO₄⁻ et NO₃⁻.

10. Procédé selon l'une quelconque des revendications 5 à 9, dans lequel dans l'étape c) on ajoute 0,7 à 1,4 mole d'hydroxyde de métal alcalin, d'hydrogénocarbonate de métal alcalin ou de carbonate de métal alcalin par mole de groupes hydroxy en bout de chaîne dans l'étape a).

11. Procédé selon l'une quelconque des revendications 5 à 10, comprenant encore l'élimination par distillation du composé monoépoxy en excès, après l'étape b) et avant l'étape c).

12. Procédé selon l'une quelconque des revendications 8 à 11, dans lequel on effectue l'étape b) en présence d'un solvant et on sépare ce dernier du mélange réactionnel avant, pendant ou après l'étape c), de préférence après l'étape c).

13. Procédé selon l'une quelconque des revendications 8 à 12, dans lequel l'étape b) se déroule en présence de gaz inerte.

14. Composition comprenant le polybutadiène à groupes époxy selon l'une quelconque des revendications 1 à 4 ou le polybutadiène à groupes époxy produit selon l'une quelconque des revendications 5 à 13, ainsi qu'au moins un durcisseur, en option en outre au moins une résine époxy.

15. Liant dans des matières adhésives, d'étanchéité et acoustiques pour utilisations dans des automobiles, formulations de résines de coulée pour isolation électrique, matières d'étanchéité pour matériaux de construction, pour l'imprégnation ou le collage de tissus de fibres de carbone et de verre comprenant le polybutadiène à groupes époxy en bout de chaîne selon l'une quelconque des revendications 1 a 4 ou le polybutadiène à groupes époxy en bout de chaîne produit selon l'une quelconque des revendications 5 à 13 et de préférence moins un durcisseur, en option en outre au moins une résine époxy.

16. Utilisation du polybutadiène à groupes époxy en bout de chaîne selon l'une quelconque des revendications 1 a 4 ou du polybutadiène à groupes époxy en bout de chaîne produit selon l'une quelconque des revendications 5 à 13 ou de la composition selon la revendication 15, en tant que liant dans des matières adhésives, d'étanchéité et acoustiques pour utilisations dans des automobiles, dans des formulations de résines de coulée pour isolation électrique, dans des matières d'étanchéité pour matériaux de construction, pour l'imprégnation ou le collage de tissus de fibres de carbone et de verre.

17. Procédé comprenant l'étape de durcissement de la composition selon la revendication 14.
